# EUROPÄISCHE PATENTSCHRIFT

(11) **EP 0 885 564 B1**
(45) Veröffentlichungstag und Bekanntmachung des Hinweises auf die Patenterteilung: **22.09.2004**
(21) Anmeldenummer: 97122919.0
(22) Anmeldetag: 27.12.1997
(51) Int. Cl.: A21D 2/02, C02F 3/30

(54) **Aufbereitungsanlage für Wasser und Verwendung des Wassers**
Plant for the treatment of water and use of this water
Installation pour le traitement d'eau et utilisation de cette eau

(30) Priorität: 20.06.1997 DE 19726114; 03.07.1997 DE 19728400
(43) Veröffentlichungstag der Anmeldung: 23.12.1998
(73) Patentinhaber: herzberger Bäckerei GmbH, 36039 Fulda (DE)
(72) Erfinder: Gutberlet, Wolfgang, 36160 Dipperz (DE); Schlinzig, Eckhard, Dr., 53783 Eitorf (DE); Maier, Walter, 91560 Weissenbronn (DE)
(74) Vertreter: Weiss, Ursula, Dr.

(56) Entgegenhaltungen:
- WO-A-91/13033
- DE-A- 1 808 105
- FR-A- 2 209 723
- US-A- 2 356 405
- US-A- 4 042 510

## Beschreibung

Die Erfindung betrifft eine Aufbereitungsanlage für Wasser, insbesondere zum Herstellen von Lebensmitteln, welche Einrichtungen zum Vermischen des Wassers mit Bestandteilen der Umgebungsluft aufweist, wobei die Aufbereitungsanlage zumindest einen zum freien Fall des Wassers unter dem Einfluss der Schwerkraft ausgebildeten Abschnitt aufweist und zumindest eine Auffangvorrichtung für das Wasser hat. Weiterhin betrifft die Erfindung die Verwendung des mit der Aufbereitungsanlage behandelten Wassers für die Herstellung von Lebensmitteln.

Aus der US-A-4 042 510 ist eine Aufbereitungsanlage der eingangs genannten Art bekannt. Bei dieser bekannten Einrichtung zur Luftanreicherung einer Flüssigkeit wird sowohl frisches als auch verschmutztes Wasser mit mehreren ineinander angeordneten Leitungen belüftet. Die Flüssigkeit fällt im freien Fall unter dem Einfluss der Schwerkraft nach unten und steigt nach oben.

Aus der WO 91/13033 A ist eine Vorrichtung zur aeroben Reinigung von Abwasser bekannt. Bei dieser Vorrichtung ist eine Serie von Behältern angeordnet, die in Kaskaden geschaltet sind. Diese Behälter sind an Ihrer Oberseite offen und das Abwasser gelangt in freiem Fall von einem Behälter zu dem nächsten, wobei es auf dem Boden des Behälters aufprallt und verteilt wird.

Aus der US-A-2 356 405 ist eine Vorrichtung zum Weichmachen von Wasser bekannt. Bei dieser Vorrichtung gelangt das Wasser über mehrere Prallbleche nach unten. Das Wasser wird in dem Kaskadenturm durch verschiedene Chemikalien weich gemacht.

Aus der DE 18 08 105 A ist ein Rieselentgaser bekannt, bei dem eine Flüssigkeit in freiem Fall von oben nach unten geführt ist und durch Kaskadenbleche verteilt wird.

Aus der FR-A-2 209 723 ist eine Anlage zur Behandlung von Abwässern bekannt, bei der das Abwasser über mehrere Kaskadenbleche fällt und durch diese verteilt wird.

Aus der DE 42 15 637 A1 ist eine Vorrichtung zum Vermischen von Wasser mit Bestandteilen der Luft bekannt, die als Vorrichtung zum Schütteln des Wassers ausgebildet ist, wobei ein Behälter mit dem Wasser vorzugsweise zwei Minuten lang insbesondere auf einer räumlichen Lemniskatenbahn umgeschwenkt werden soll. Durch Verwendung von in einer derartigen Vorrichtung behandelten Wasser bei der Zubereitung von Nahrungsmitteln wird insbesondere deren Haltbarkeit erhöht.

Nachteilig bei dieser Vorrichtung ist der Energiebedarf zum Schütteln des Wassers, wodurch der wirtschaftliche Nutzen wesentlich verringert wird. Hinderlich wirkt sich auch der zum Schütteln des Wassers erforderliche Zeitaufwand aus, da die Anlage diskontinuierlich arbeitet. Weiterhin müssen solche Vorrichtungen wegen den Erfordernissen des Schütteins eines relativ großen Behälters mit Wasser aufwendig gestaltet sein, sind deshalb teuer in der Herstellung und erfordern regelmäßige Wartungsarbeiten.

Der Erfindung liegt die Aufgabe zugrunde, eine Vorrichtung der eingangs genannten Art zu schaffen, welche ein aufbereitetes Wasser mit der genannten positiven Wirkung auf die hieraus gewonnenen Lebensmittel ohne zusätzlichen Energieaufwand und kontinuierlich in beliebigen Mengen liefert.

Diese Aufgabe wird erfindungsgemäß dadurch gelöst, dass dem Abschnitt zum freien Fall des Wassers ein Element zum Fließen des Wassers von einem höheren zu einem niedrigeren Niveau vorgeschaltet ist, wobei diese Wasserrinnen aus einem wärmeenergiespeichernden Material bestehen und dass das Gehäuse aus lichtdurchlässigem Material besteht.

Diese Aufbereitungsanlage arbeitet wesentlich wirkungsvoller als die bekannten Aufbereitungsanlagen. Der wesentliche Gedanke der vorliegenden Erfindung besteht darin, dass das Wasser durch verschiedene Abschnitte der erfindungsgemäßen Aufbereitungsanlage gelangt, wobei das Wasser von einem höheren zu einem niedrigeren Niveau fließt und dann unter den Einfluss der Schwerkraft fällt. Bei den bekannten Vorrichtungen fällt das Wasser unter dem Einfluss der Schwerkraft und prallt anschließend auf ein Verteilerblech auf.

Eine solche Aufbereitungsanlage erfordert im Gegensatz zu der eingangs genannten Aufbereitungsanlage mit einem in eine Schüttelbewegung zu versetzenden Behälter einen wesentlich geringeren Energiebedarf, da sich das Wasser ausschließlich unter dem Einfluss der Schwerkraft bewegt. Die erfindungsgemäße Aufbereitungsanlage benötigt keinerlei sich bewegende Teile und deshalb auch keinen Antrieb. Aus diesem Grunde arbeitet sie weitgehend verschleißfrei und benötigt kaum Wartungsarbeiten. Im Gegensatz zu der vorbekannten Aufbereitungsanlage vermag die erfindungsgemäße Aufbereitungsanlage kontinuierlich zu arbeiten, so dass sie sich für die Aufbereitung größerer Wassermengen eignet. Weiterhin kann die Aufbereitungsanlage nach der Erfindung kompakter ausgebildet werden als vergleichbare Anlagen mit gleicher Leistung. Die Ursache für die vorteilhaften Eigenschaften des mit der erfindungsgemäßen Aufbereitungsanlage behandelten Wassers konnte nicht völlig geklärt werden. Entscheidend dürfte jedoch der erhöhte Sauerstoffgehalt des Wassers und die Tatsache sein, dass durch die Aufbereitung auch eine Anreicherung mit den ebenfalls in der Umgebungsluft vorhandenen Aminosäuren erfolgt. Das mit der erfindungsgemäßen Vorrichtung behandelte Wasser eignet sich hervorragend zum Backen von Teigwaren, bietet jedoch auch Vorteile bei der Herstellung von anderen Lebensmitteln, insbesondere Getränke und Speiseeis.

Als vorteilhaft hat es sich herausgestellt, wenn das Element als nach oben hin offene Wasserrinne ausgebildet ist.

Bei der Nahrungsmittelzubereitung wirkt es sich besonders förderlich aus, wenn das dabei verwendete Wasser der natürlichen Lichtstrahlung ausgesetzt wird und beim Fließen durch die Rinnen die dort durch das Licht gespeicherte Energie aufnehmen kann. Das lässt sich gemäß einer besonders vorteilhaften Weiterbildung der Erfindung verwirklichen, wenn das Gehäuse aus lichtdurchlässigem Material und die Wasserrinnen aus einem wärmeenergiespeichernden Material besteht. Überraschenderweise hat sich gezeigt, dass in einer solchen Aufbereitungsanlage behandeltes Wasser seine vorteilhaften Eigenschaften wesentlich länger behält als Wasser, welches in einem geschlossenen Behälter durch Schwenken des Behälters auf einer räumlichen Lemniskatenbahn behandelt wurde. Auch gehen die günstigen Eigenschaften des Wassers nicht durch Pumpen des Wassers verloren. Obgleich für die Behandlung des Wassers das natürliche Licht eine vorteilhafte Wirkung ausübt, hat es sich als vorteilhaft herausgestellt, wenn die Entnahme des Wassers aus der Vorrichtung nachts erfolgt.

Hierzu besteht das Element aus einem lichtdurchlässigen Material.

Aus der Luft aufgenommene Bestandteile werden während des Fließens des Wassers besonders gleichmäßig in diesem verteilt, wenn das Element eine rauhe Oberfläche hat. Durch die gleichmäßige Verteilung wird erreicht, dass die Bestandteile relativ lange Zeit in dem Wasser verbleiben, so dass man das Wasser vor seiner Verwendung bei der Nahrungsmittelzubereitung begrenzte Zeit aufbewahren kann.

Als Werkstoff für das als Rinne ausgebildete Element ist Granit aufgrund seiner Eigenschaft, Wärme an das Wasser abgeben zu können, besonders günstig.

Zur weiteren Erhöhung der Wirksamkeit der Aufbereitungsanlage trägt es bei, wenn hintereinander abwechselnd und mehrfach jeweils ein Element zum Fließen des Wassers und ein Abschnitt zum freien Fall des Wassers vorgesehen sind. Hierdurch wird erreicht, dass dem Wasser vor jedem freien Fall jeweils ein Element als Beruhigungsstrecke zur Verfügung steht.

Das in der Aufbereitungsanlage behandelte Wasser ist vor Verschmutzungen durch die Umgebung geschützt, wird jedoch stets mit frischer Luft versorgt, wenn sie ein eine Belüftung aufweisendes Gehäuse hat.

Das in der Aufbereitungsanlage behandelte Wasser wird während der Aufbereitung durch das UV-Licht der natürlichen Sonneneinstrahlung günstig beeinflusst, wenn gemäß einer anderen Weiterbildung der Erfindung das Gehäuse aus lichtdurchlässigem Material besteht. Durch die Kombination eines lichtdurchlässigen Gehäuses mit Rinnen aus wärmespeicherndem Material wird die vom Licht abgegebene Energie vom Wasser beim Fließen durch die Rinnen aufgenommen und in das Wasser eingeleitet.

Die vom Wasser aufgenommenen Bestandteile der Luft werden durch Verwirbelung des Wassers im Wasser gleichmäßig verteilt, wenn im unteren Bereich der Aufbereitungsanlage als das Wasser leitende Elemente Flowformen angeordnet sind.

Eine vorteilhafte Verwendung des mit der Aufbereitungsanlage nach der Erfindung aufbereiteten Wassers liegt darin, es bei der Herstellung von Lebensmitteln zu verwenden. In Bäckereibetrieben können mit dem vorbehandelten Wasser sogar Backbleche gereinigt werden. Zusätzlich zeigte sich, dass nach der Reinigung im zurückbleibenden Schmutzwasser Feststoffe sich leichter vom Wasser trennen als bei unbehandeltem Wasser und nach unten absinken.

Die erfindungsgemäße Vorrichtung lässt verschiedene Abwandlungen zu. Zu ihrer weiteren Verdeutlichung wird nachfolgend auf die Zeichnung Bezug genommen. Diese zeigt in
- Fig.1: einen vertikalen Schnitt durch eine erfindungsgemäße Aufbereitungsanlage,
- Fig.2: die erfindungsgemäße Aufbereitungsanlage in einer perspektivischen Darstellung,
- Fig.3: eine Draufsicht auf eine Flowform,
- Fig.4: eine Seitenansicht der Flowform.

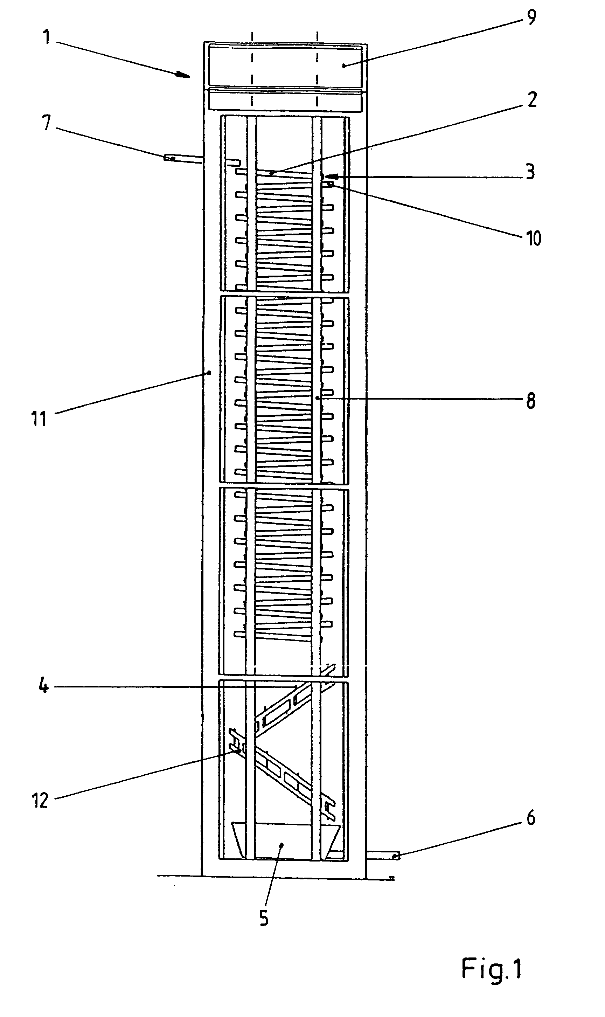

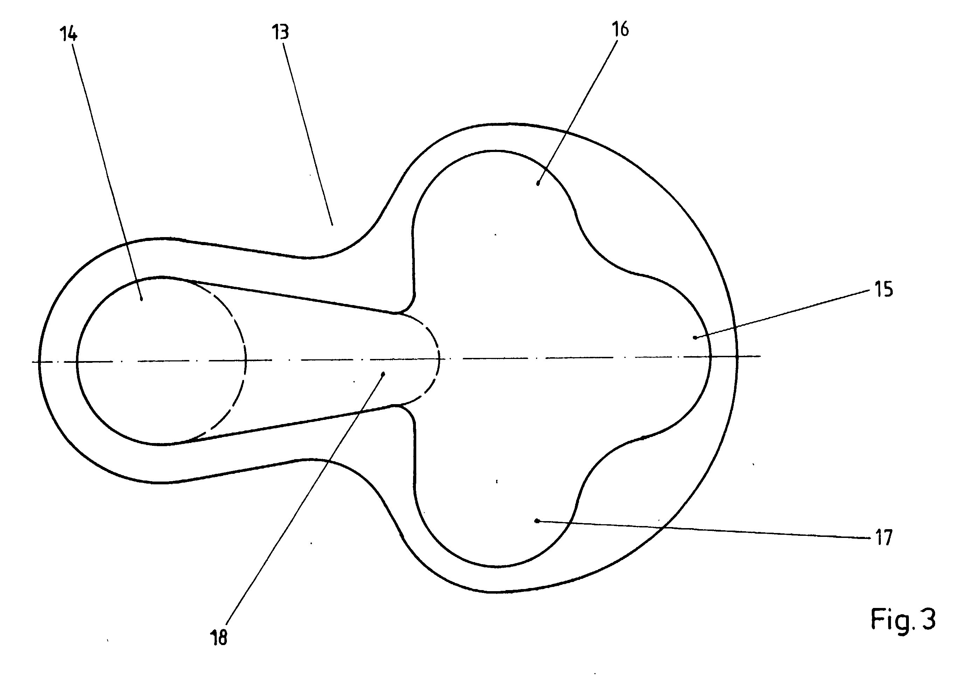

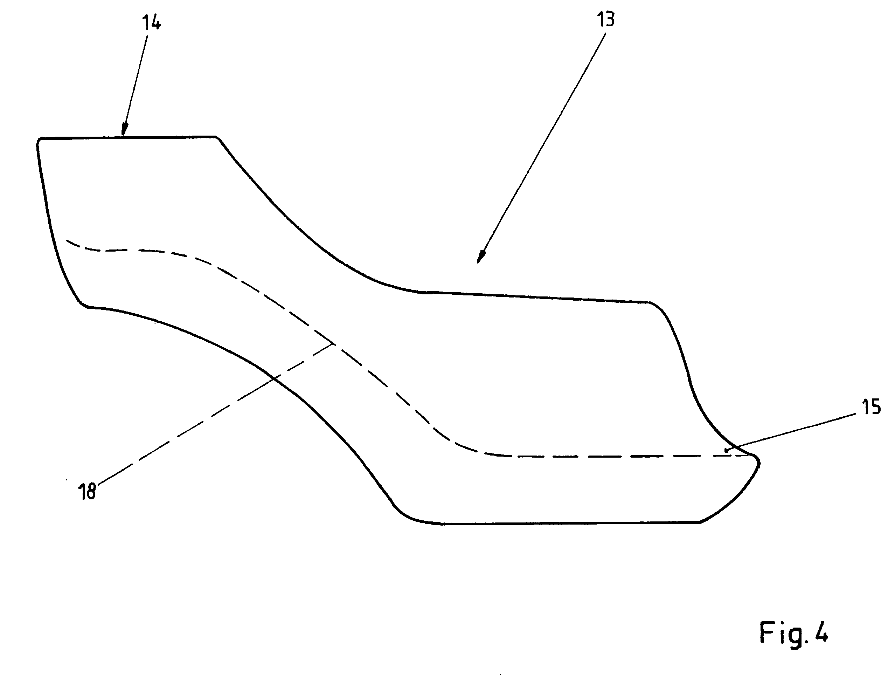

Die Figur 1 zeigt eine Aufbereitungsanlage 1 mit einer zum Leiten des Wassers ausgebildeten, geneigten Rinne 2, mit einem anschließenden, zum freien Fall des Wassers ausgeführten Abschnitt 3 und einer Auffangvorrichtung 10. Daran schließt sich eine die Fließrichtung umkehrende Rinne an, so dass die Aufbereitungsanlage 1 aus mehreren aufeinander folgenden und von einem Gestell 8 gehaltenen Stufen besteht. Das aufzubereitende Wasser gelangt über einen Zulauf 7 in die Rinne 2 und gelangt dann im weiteren Verlauf über ein System von weiteren Rinnen, Abschnitten in denen das Wasser frei fällt und Auffangvorrichtungen in einen tiefer liegenden Bereich der turmartigen Anordnung. Dort gelangt das Wasser in einen Abschnitt, in dem die Aufbereitungsanlage 1 eine Halterung 12 mit einer Flowformaufnahme 4 aufweist. Eine zum Zwecke der besseren Übersichtlichkeit nicht dargestellte Flowform ist in den Figuren 3 und 4 näher beschrieben. Auf der untersten Ebene der Aufbereitungsanlage 1 befindet sich ein Auffangbecken 5, in dem das derart aufbereitete Wasser gesammelt wird. Zur weiteren Verwendung wird das Wasser über einen Ablauf 6 nach außen geleitet. Ein Gehäuse 11 dient mit den darin eingesetzten, nicht dargestellten Glasscheiben dem Schutz gegen unerwünschte Umwelteinflüsse. Am oberen Ende ist zum Zwecke einer verbesserten Belüftung eine Belüftungsklappe 9 angebracht.

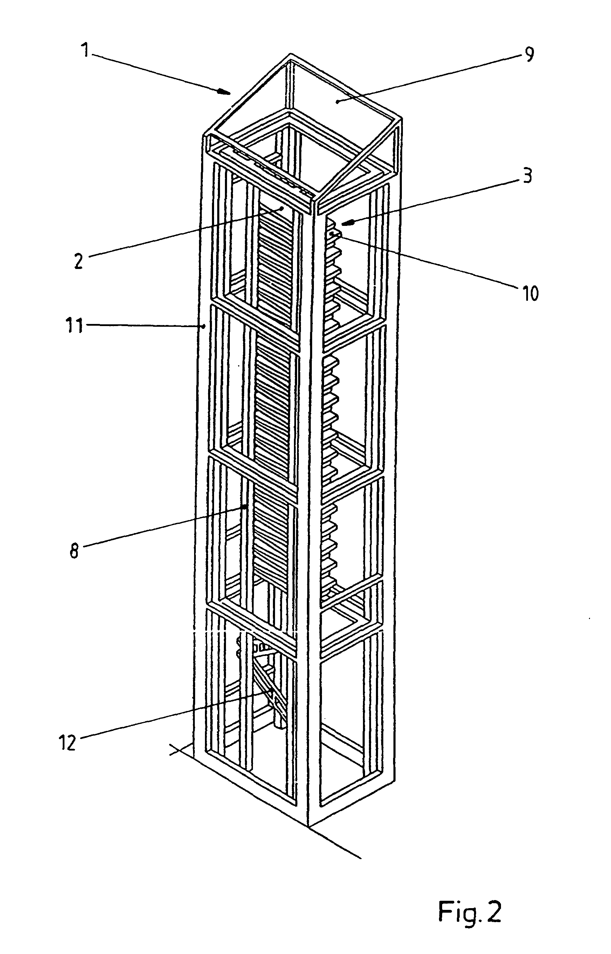

Die Figur 2 zeigt die in Figur 1 beschriebene Aufbereitungsanlage 1 in einer perspektivischen Darstellung. Zur besseren Anschaulichkeit sind hier der Zu- und Ablauf mit der Auffangvorrichtung und die in die Halterung 12 einzusetzende Flowform nicht dargestellt.

Figur 3 zeigt eine Flowform 13 in einer Aufsicht. Zu erkennen ist ein Auffangbecken 14 zum Sammeln des Wassers. Von dort gelangt das Wasser durch eine Rinne 18 zu zwei parallelen Wirbelkammern 16 und 17, wo eine besonders effektive Vermischung des Wassers mit Bestandteilen der Luft stattfindet. Schließlich gelangt das Wasser zu einem Ablauf 15, von wo sich das Wasser im freien Fall in ein nicht dargestelltes, tiefer liegendes Becken ergießt.

In Figur 4 ist die genannte Flowform 13 in einer Seitenansicht dargestellt. Zu erkennen ist das auf einer höheren Ebene gelegene Auffangbecken 14, von wo sich das Wasser durch eine gestrichelt eingezeichnete Rinne 18 und über den Rand des auf einer niedrigeren Ebene gelegenen Ablaufs 15 im freien Fall ergießt.

## Patentansprüche

1. Aufbereitungsanlage für Wasser, insbesondere zum Herstellen von Lebensmitteln, welche Einrichtungen zum Vermischen des Wassers mit Bestandteilen der Umgebungsluft aufweist, wobei die Aufbereitungsanlage zumindest einen zum freien Fall des Wassers unter dem Einfluss der Schwerkraft ausgebildeten Abschnitt aufweist und zumindest eine Auffangvorrichtung für das Wasser hat,
**dadurch gekennzeichnet,**
**dass** dem Abschnitt (3) zum freien Fall des Wassers ein Element (2, 18) zum Fließen des Wassers von einem höheren zu einem niedrigeren Niveau vorgeschaltet ist, wobei diese Wasserrinnen (2, 18) aus einem wärmeenergiespeichernden Material bestehen und dass das Gehäuse (11) aus durchlässigem Material besteht.

2. Aufbereitungsanlage nach Anspruch 1,
**dadurch gekennzeichnet,**
**dass** das Element (2, 18) als nach oben hin offene Wasserrinne ausgebildet ist.

3. Aufbereitungsanlage nach Anspruch 1 oder 2,
**dadurch gekennzeichnet,**
**dass** das Element (2, 18) eine rauhe Oberfläche hat.

4. Aufbereitungsanlage nach Anspruch 3,
**dadurch gekennzeichnet,**
**dass** das Element (2, 18) aus Granit besteht.

5. Aufbereitungsanlage nach zumindest einem der vorangehenden Ansprüche,
**dadurch gekennzeichnet,**
**dass** hintereinander abwechselnd und mehrfach jeweils ein Element (2, 18) zum Fließen des Wassers und ein Abschnitt (3) zum freien Fall des Wassers vorgesehen sind.

6. Aufbereitungsanlage nach zumindest einem der vorangehenden Ansprüche,
**dadurch gekennzeichnet,**
**dass** im unteren Bereich der Aufbereitungsanlage (1) als das Wasser leitende Elemente Flowformen (13) angeordnet sind.

7. Verwendung des mit der Aufbereitungsanlage nach zumindest einem der vorangehenden Ansprüche aufbereiteten Wassers für die Herstellung von Lebensmitteln.

## Claims

1. A treatment installation for water, in particular for the production of foodstuffs, which has devices for mixing the water with constituents of the ambient air, wherein the treatment installation has at least one portion adapted for free fall of the water under the influence of the force of gravity and at least one catch apparatus for the water,
**characterised in that** connected upstream of the portion (3) for free fall of the water is an element (2, 18) for flow of the water from a higher to a lower level, wherein said water channels (2, 18) comprise a thermal energy-storing material and that the housing (11) comprises transmissive material.

2. A treatment installation according to claim 1 **characterised in that** the element (2, 18) is in the form of an upwardly open water channel.

3. A treatment installation according to claim 1 or claim 2 **characterised in that** the element (2, 18) has a rough surface.

4. A treatment installation according to claim 3 **characterised in that** the element (2, 18) comprises granite.

5. A treatment installation according to at least one of the preceding claims **characterised in that** provided in alternate succession and in a multiple arrangement in each case are an element (2, 18) for the flow of water and a portion (3) for free fall of the water.

6. A treatment installation according to at least one of the preceding claims **characterised in that** flow forms (13) are arranged in the lower region of the treatment installation (1), as elements for guiding the water.

7. Use of the water treated with the treatment installation according to at least one of the preceding claims for the production of foodstuffs.

## Revendications

1. Installation de traitement de l'eau destinée notamment à la fabrication de denrées alimentaires, comportant des dispositifs pour mélanger l'eau avec des constituants de l'air ambiant, l'installation de traitement comportant au moins une section réalisée pour la chute libre de l'eau sous l'effet de la force de gravité et au moins un dispositif de récupération pour l'eau,
**caractérisée en ce que**
un élément (2, 18) pour l'écoulement de l'eau d'un niveau plus élevé à un niveau plus bas est disposé en amont de la section (3) destinée à la chute libre de l'eau, ces rigoles à eau (2, 18) étant constituées d'un matériau à accumulation d'énergie thermique, et **en ce que** la structure (11) est constituée de matériau perméable.

2. Installation de traitement selon la revendication 1, **caractérisée en ce que**
l'élément (2, 18) est agencé sous la forme d'une rigole à eau ouverte vers le haut.

3. Installation de traitement selon la revendication 1 ou 2, **caractérisée en ce que**
la surface de l'élément (2, 18) est rugueuse.

4. Installation de traitement selon la revendication 3, **caractérisée en ce que**
l'élément (2, 18) est en granit.

5. Installation de traitement selon l'une au moins des revendications précédentes, **caractérisée en ce qu'**
un élément (2, 18) pour l'écoulement de l'eau et une section (3) pour la chute libre de l'eau sont respectivement prévus en alternance l'un derrière l'autre, et à de multiples reprises.

6. Installation de traitement selon l'une au moins des revendications précédentes, **caractérisée en ce que**
des formes d'écoulement (13) sont disposées en tant qu'éléments de guidage de l'eau dans la partie inférieure de l'installation de traitement (1).

7. Utilisation de l'eau traitée par l'installation de traitement selon l'une au moins des revendications précédentes pour la fabrication de denrées alimentaires.
